# EUROPEAN PATENT SPECIFICATION

(11) **EP 3 156 513 B1**
(45) Date of publication and mention of the grant of the patent: **26.09.2018**
(21) Application number: 16192774.4
(22) Date of filing: 07.10.2016
(51) Int. Cl.: C23C 4/01, C23C 4/134, F01D 5/28, B05C 21/00, B05D 1/08, B05D 3/00, B05D 1/00, F01D 5/18, C09D 1/00

(54) **METHOD OF COATING AN ARTICLE, WATER SOLUBLE PLUG FOR PREVENTING HOLE BLOCKAGE DURING COATING**
VERFAHREN ZUR BESCHICHTUNG EINES ARTIKELS, WASSERLÖSLICHER STOPFEN ZUR VERHINDERUNG VON LOCHBLOCKIERUNG WÄHREND DER BESCHICHTUNG
PROCÉDÉ DE REVÊTEMENT D'UN ARTICLE, BOUCHON SOLUBLE DANS L'EAU POUR EMPÊCHER UNE OBTURATION DE TROU PENDANT LE REVÊTEMENT

(30) Priority: 12.10.2015 CN 201510656992
(43) Date of publication of application: 19.04.2017
(73) Proprietor: General Electric Company, Schenectady, NY 12345 (US)
(72) Inventor: PAN, Zhida, Shanghai, Shanghai 201203 (CN); ZHAO, Jianzhi, Shanghai, Shanghai 201203 (CN); HARDWICKE, Canan Uslu, Greenville, SC South Carolina 29615 (US); PENG, Wenqing, Shanghai, Shanghai 201203 (CN); CAO, Lei, Shanghai, Shanghai 201203 (CN); EMINOGLU, Cem Murat, Greenville, SC South Carolina 29615 (US); ZHANG, Liming, Greenville, SC South Carolina 29615 (US)
(74) Representative: Foster, Christopher Michael

(56) References cited:
- EP-A1- 2 881 489
- EP-A2- 2 662 469

## Description

### FIELD OF THE INVENTION

The present invention relates generally to a method of coating an article with at least one hole, a water soluble plug used for preventing hole blockage during coating an article with at least one hole, and an article having at least one hole masked with a water soluble plug paste.

### BACKGROUND OF THE INVENTION

Articles such as engine components used on aircraft or for power generation are typically run at a very high temperature. Since high temperatures may damage alloys used for the components, a variety of approaches have been used to raise the operating temperature of the components. One approach calls for the incorporation of internal cooling holes in the component, through which cool air is forced during engine operation. The cooling holes may be formed in the substrate of the component by specialized laser-drilling techniques. Cooling air (usually provided by the engine's compressor) is fed through the holes from the cooler side to the hot side of the combustor wall. As long as the holes remain clear, the rushing air will assist in lowering the temperature of the hot metal surface and preventing melting or other degradation of the component. Another approach for protecting the component from the high temperature involves the use of a thermal barrier coating (TBC). Sometimes the use of TBC in conjunction with the cooling holes is the most effective means for protecting an engine part.

However, incorporation of both TBC and cooling holes is very difficult. For example, the cooling holes sometimes cannot be formed in the engine part after a TBC has been applied, since lasers usually cannot effectively penetrate both the ceramic material and the metal to form the pattern of holes. If the cooling holes are formed prior to the application of the TBC system, they may become covered and at least partially obstructed when the TBC is applied. Complete removal of the TBC material from the holes may be very time-consuming and ineffective, if not impossible. Any obstruction of the holes during engine operation may interfere with the passage of cooling air, may waste compressor power, and may possibly lead to of engine component damage due to overheating.

Therefore, methods of coating an article with holes that do not suffer from the above drawbacks are desirable.

### SUMMARY OF THE INVENTION

A method includes masking with a water-soluble plug paste, at least one hole of an article, wherein the hole opens onto a surface of the article, applying at least one coating to the surface of the article, and removing the paste including contacting the paste with water, a water containing liquid or water containing environment to dissolve or re-disperse the paste, leaving at least one open hole in the surface of the coated article. The water-soluble plug paste includes from about 20 weight percent to about 80 weight percent of a high temperature resistant filler material, from about 0.5 weight percent to about 20 weight percent of a hydrogen phosphate compound, from about 0.5 weight percent to about 15 weight percent of a polyhydroxy compound, and from about 5 weight percent to about 25 weight percent of water. The high temperature resistant filler material includes a first material and a second material and has an average particle size in a range from about 0.1 micron to about 100 microns. The first material includes alkali metal doped alumina, zirconium oxide, titanium oxide, or a combination thereof. The second material includes a silicate. A weight ratio between the first material and the second material is in a range from about 1 to about 10.

An article includes a surface and at least one hole that opens onto the surface. At least one of the at least one hole is masked with a water-soluble plug paste. The water-soluble plug paste includes from about 20 weight percent to about 80 weight percent of a high temperature resistant filler material, from about 0.5 weight percent to about 20 weight percent of a hydrogen phosphate compound, from about 0.5 weight percent to about 15 weight percent of a polyhydroxy compound, and from about 5 weight percent to about 25 weight percent of water. The high temperature resistant filler material includes a first material and a second material and has an average particle size in a range from about 0.1 micron to about 100 microns. The first material includes alkali metal doped alumina, zirconium oxide, titanium oxide, or a combination thereof. The second material includes a silicate. A weight ratio between the first material and the second material is in a range from about 1 to about 10.

A water-soluble plug includes from about 25 weight percent to about 90 weight percent of a high temperature resistant filler material, from about 0.5 weight percent to about 25 weight percent of a hydrogen phosphate compound, and from about 0.5 weight percent to about 20 weight percent of a polyhydroxy compound. The high temperature resistant filler material includes a first material and a second material and has an average particle size in a range from about 0.1 micron to about 100 microns. The first material includes alkali metal doped alumina, zirconium oxide, titanium oxide, or a combination thereof. The second material includes a silicate. A weight ratio between the first material and the second material is in a range from about 1 to about 10.

### BRIEF DESCRIPTION OF THE DRAWINGS

The above and other aspects, features, and advantages of the present disclosure will become more apparent in light of the subsequent detailed description when taken in conjunction with the accompanying drawings in which:
FIG. 1 is a perspective view of an article having a plurality of holes formed therein, in accordance with one embodiment of the present disclosure.
FIG. 2 illustrates a status of an article before holes within the article are masked, in accordance with one embodiment of the present disclosure.
FIG. 3 illustrates a status of the article of FIG. 2 when the holes within the article are filled and thereby masked with a paste or plugs.
FIG. 4 illustrates a status of the article of FIG. 2 when the article is applied with a coating.

### DETAILED DESCRIPTION OF THE INVENTION

Unless defined otherwise, technical and scientific terms used herein have the same meaning as is commonly understood by one of skill in the art to which this invention belongs. The terms "a" and "an" do not denote a limitation of quantity, but rather denote the presence of at least one of the referenced items. Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. Additionally, when using an expression of "about a first value - a second value," the about is intended to modify both values. In at least some instances, the approximating language may correspond to the precision of an instrument for measuring the value. Here, and throughout the specification and claims, range limitations may be combined and/or interchanged, such ranges are identified and include all the sub-ranges contained therein unless context or language indicates otherwise.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Embodiments of the present disclosure relate to a paste used to mask at least one hole in an article when applying a coating to the article, a water-soluble hole plug made from the paste, an article having at least one hole thereof masked with the paste, and a method for coating an article with at least one hole, during which the at least one hole are masked with the paste or the plug to prevent hole blockage. As used herein, "mask" or "masked" means to close off the surface of the hole by partially or completely filling the hole with the paste or plug. As used herein, the term "water-soluble" means the paste or plug can be dissolved or re-dispersed in water, a water containing liquid, or water containing environment (such as moisture environment). Thus removal of the water-soluble paste or plug may be facilitated by contacting the paste or plug with water, a water containing liquid, or water containing environment. As such, the paste or plug may be directly dissolved by water, or may be re-dispersed by water and then easily be broken and taken away. As used herein, the "water containing liquid" or "water containing environment" contains at least 10 weight percent of water. During the process of coating, the paste which may be dried prior to or during the process of coating, or the plug can resist against coating environment and prevent hole blockage. After coating, the paste or plug can be easily removed due to its water solubility.

More specifically, the paste includes a high temperature resistant filler material including a first material and a second material mixed at a certain ratio to ensure an appropriate combination of strength and solubility. The first material includes alkali metal doped alumina, zirconium oxide, titanium oxide, or a combination thereof. The second material includes a silicate. The paste further includes a hydrogen phosphate compound, a polyhydroxy compound, and water.

As used herein the "high temperature resistant filler material" is a material that generally withstands temperatures greater than about 315°C (about 600°F) or materials that withstand temperatures generally in the range of about 315°C (about 600°F) to about 982°C (about 1800°F). In some embodiments, the high temperature resistant filler material can withstand temperatures in the range of about 538°C (about 1000°F) to about 982°C (about 1800°F) for at least 1 or 2 hours. The high temperature resistant filler material has an average particle size in a range from about 0.1 micron to about 100 microns. A weight percentage of the high temperature resistant filler material relative to the paste is in a range from about 20 weight percent to about 80 weight percent. In some embodiments, the range is from about 60 weight percent to about 80 weight percent. A weight ratio between the first material and the second material is in a range from about 1 to about 10. In some embodiments, the range is from about 1 to about 8. In some embodiments, the range is from about 1 to about 6. In some embodiments, the first material includes alkali metal doped alumina. The alkali metal doped alumina may be sodium or potassium doped alumina, such as beta-alumina and boehmite. In some specific embodiments, the first material includes beta-alumina, boehmite, or a combination thereof. In some embodiments, the first material includes zirconium oxide, titanium oxide, or a combination thereof. In some embodiments, the second material comprises zirconium silicate.

In some embodiments, a weight percentage of the hydrogen phosphate compound relative to the paste is in a range from about 0.5 weight percent to about 20 weight percent. In some embodiments, the range is from about 10 weight percent to about 20 weight percent. In some embodiments, the hydrogen phosphate compound includes sodium hydrogen phosphate, potassium hydrogen phosphate, or a combination thereof.

In some embodiments, a weight percentage of the polyhydroxy compound relative to the paste is in a range from about 0.5 weight percent to about 15 weight percent. In some embodiments, the range is from about 1 weight percent to about 5 weight percent. In some embodiments, the polyhydroxy compound includes sugar.

In some embodiments, a weight percentage of water relative to the paste is in a range from about 5 weight percent to about 25 weight percent. In some embodiments, the range is from about 10 weight percent to about 15 weight percent.

During a process of applying a coating such as a thermal barrier coating (TBC) layer to an article with holes, the paste as described above may be applied manually or dispensed with a syringe to mask the holes. The paste, once dried prior to or during the process of applying the coating, forms plug-in pins in the holes to support the coating and prevent the holes from being blocked by the coating material. Once the coating is applied, the holes can be easily reopened by soaking the article in water or a water containing liquid, or by placing the article in water containing environment for a period, because the dried paste can be dissolved or re-dispersed in the water or water containing liquid/environment and the re-dispersed paste can be removed conveniently.

In some embodiments, the paste may be pre-cured and molded to form dry plugs with configuration fit for the holes in the article. In use, these plugs can be directly inserted into the holes in the article to achieve the hole masking. As such, the curing of the paste can be separated and independent from the process of applying the coating. The plugs have a composition similar to the dried paste. In some embodiments, the plug includes from about 25 weight percent to about 90 weight percent of a high temperature resistant filler material, from about 0.5 weight percent to about 25 weight percent of a hydrogen phosphate compound, and from about 0.5 weight percent to about 20 weight percent of a polyhydroxy compound, wherein the high temperature resistant filler material, the hydrogen phosphate compound and the polyhydroxy compound may be similar to or the same with those described herein above. More specifically, the weight percentage of the high temperature resistant filler material relative to the plug may be in a range from about 70 weight percent to about 90 weight percent in some embodiments. In some embodiments, the weight percentage of the hydrogen phosphate compound relative to the plug may be in a range from about 5 weight percent to about 15 weight percent. In some embodiments, the weight percentage of the polyhydroxy compound to the plug is in a range from about 1 weight percent to about 5 weight percent.

The paste or plug described herein above is applicable in either coating a newly manufactured article or re-coating a used article with an original coating thereof scraped off. The article as described herein may be used in any applications that undergo temperature changes, such as, but not limited to, power generation systems which include, but are not limited to, gas turbines, steam turbines, jet turbines, and other turbine assemblies. Some examples of the articles, include but are not limited to, turbine blades, nozzles, vanes, shrouds, buckets, transition pieces and liners used in power generation systems.

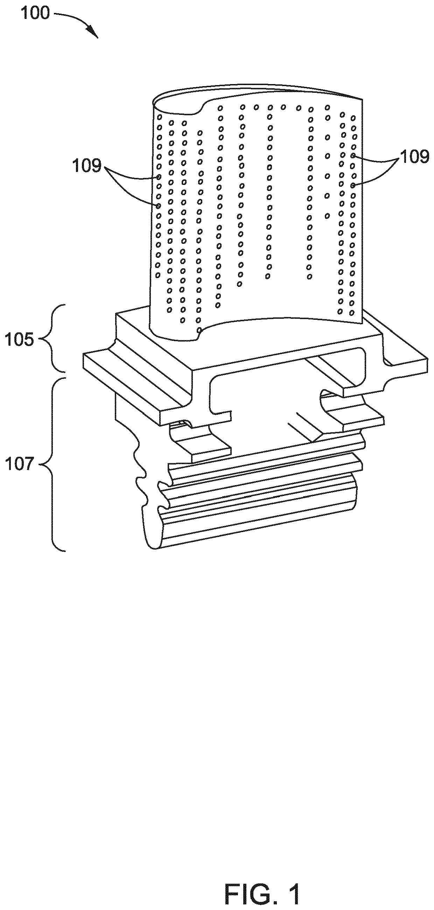

For example, FIG. 1 shows a turbine blade 100 that can be used with the method described herein. The turbine blade 100 has three sections: an airfoil section 103, a platform section 105, and a dovetail section 107. Airfoil section 103 includes a plurality of cooling holes 109 which permit cooling air to exhaust from an interior space of turbine blade 100. Turbine blade 100 is typically fabricated from a high temperature oxidation and corrosion resistant alloy with high temperature strength, such as a nickel-based superalloy. An exterior surface of airfoil section 103 of the turbine blade 100 may be coated with any coating system known in the art for coating on a turbine blade 100 opposed to combustion gases. A known coating system includes a bond coat on the surface of the turbine blade 100, typically comprising an aluminide or MCrAlY (where M=Ni, Co, and/or Fe) and a TBC layer disposed on the bond coating, which may include ceramic materials, such as yttria stabilized zirconia. The TBC layer is typically applied by a process, such as air plasma spray or electron beam physical vapor deposition, that provides the surface with a coating morphology suitable for providing airfoil section 103 surface with resistance to heat. The combination of the bond coating and TBC layer provide airfoil section 103 with long-term resistance to heat and corrosion resulting from contact with the combustion gas stream.

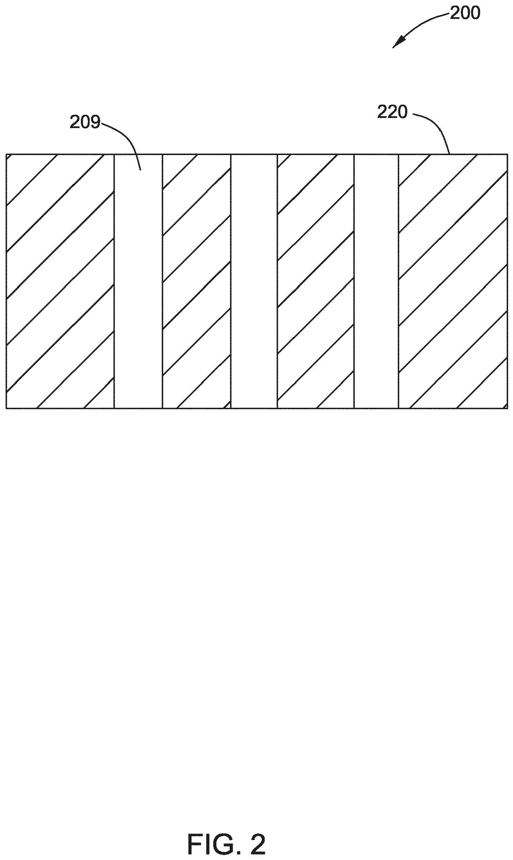

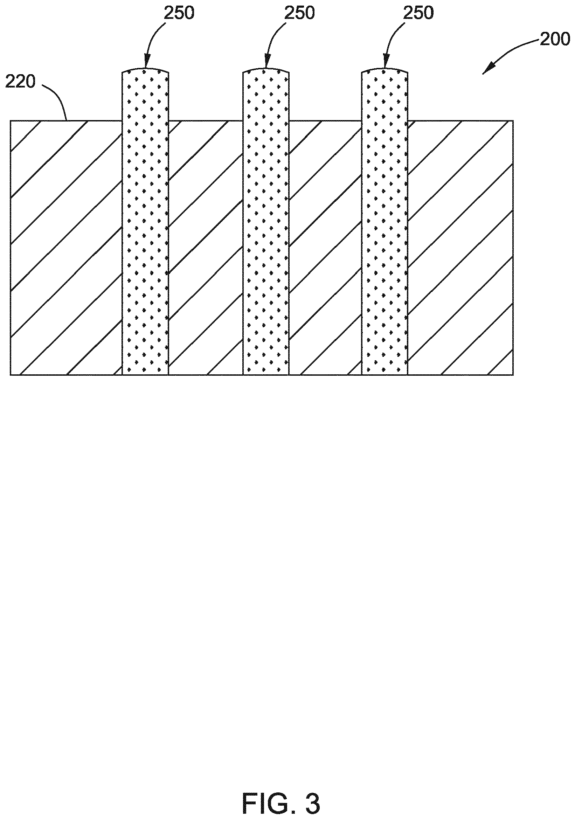

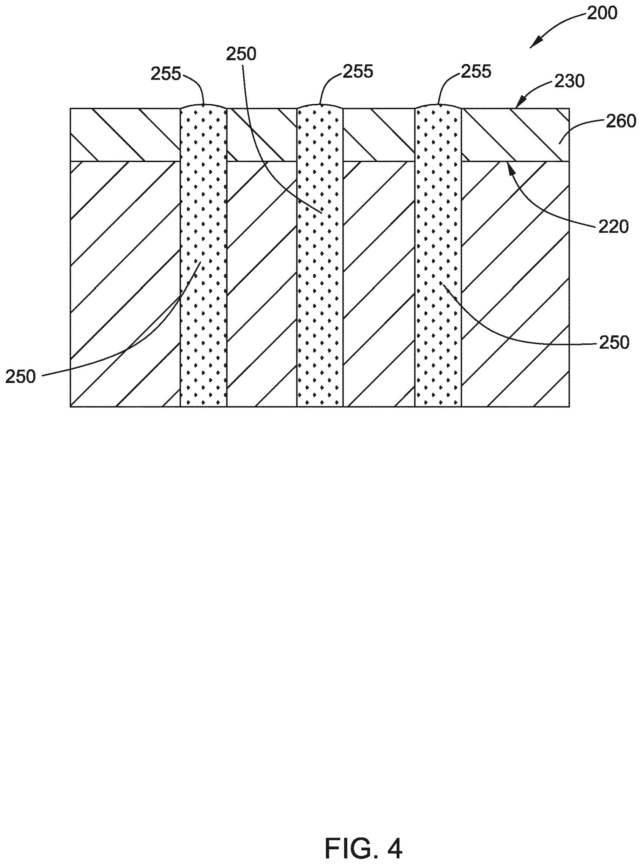

It should be noted that the turbine blade 100 of FIG. 1 is merely illustrative and is non-limiting. The paste may be used on any suitable article which has a surface and at least one hole that opens onto the surface, such as an article 200 as shown in FIGS. 2-4. FIGS. 2-4 illustrate a cross sectional view of the article 200, in which the inside of holes 209 within the article are shown. Three different statuses of the article 200 are illustrated in FIGS. 2-4, respectively, wherein FIG. 2 illustrates a status before the holes 209 are masked, FIG. 3 illustrates a status when the holes 209 are filled and thereby masked with a paste or plugs as described herein above, and FIG. 4 illustrates a status when the article 200 is applied with a coating.

Referring to FIGS. 3 and 4, the holes 209 are filled, or at least partially filled with a paste or plugs 250. The paste or plugs 250 may be substantially even with an external surface 220 of article 200 or situated slightly above the external surface 200. Therefore, when a coating 260 is applied to the external surface 220, the coating material can be prevented from entering the holes 209. In some embodiments, the paste or plugs 250 have a portion of an arch shape 255 above an external surface 230 of the coated article. The arch shaped portion 255 above the external surface 230 makes the coating material probably applied over the hole become easier to be detected and removed. Moreover, the arch shaped portion 255 does not shadow the coating material from being applied to the other areas during coating. The coating 260 is applied at elevated temperatures, generally greater than about 400°C. The paste or plugs 250 withstand the high temperatures necessary for application of coatings. During application of the coating 260, organics of the paste or plugs 250 may be "burned" off depending on the temperature that surface 220 reaches during coatings processing.

After coating 260 is applied, the article 200 is cooled. Then the dry paste or plugs 250 can be easily removed by immersing the coated article 200 in a bath of water. The water bath causes the dry paste or plug 250 to dissolve in the water and frees the holes 209, leaving the article 200 having coating 260 thereon and holes 209 free from any coating or other materials, without having to engage in hand drilling to clear holes 209. To aid the dry paste or plug removal process, an external force such as mechanical (e.g. pressurized water) or acoustical vibration (e.g. ultrasonics) may be employed in the water bath. For example, the dissolution may be accelerated by using pressurized water to flush through the cooling holes in some embodiments. After removing the dry paste or plugs from the holes, final heat treatment may be applied to the article to cure the applied coating.

The dry paste or plug which is made from the paste including a first and second high temperature resistant filler material mixed at a certain ratio has an appropriate combination of strength and water solubility, and thus can withstand the applied coating when a coating is applied to the article and can be dissolved in water after the coating is applied.

Moreover, as the masked holes can be opened by dissolving or re-dispersing the paste or plug material in the holes, substantially without use of mechanical force which may cause deformation of the holes, the holes can substantially maintain an original shape and a cross-sectional dimension thereof through the applying of the coating and removing of the paste or plug material. As used herein, "substantially maintain a cross-sectional dimension" means that, as for a hole has an initial cross sectional area, the "open hole" (the hole after removal of the paste or plug material) has a cross sectional area at least 95% of the initial cross-sectional area.

The following examples are intended to further illustrate embodiments of the present disclosure. They are not intended to limit the present disclosure in any way.

### Example 1

Zirconia based pastes were prepared by mixing zirconia (ZrO₂), zircon (ZrSiO₄), potassium hydrogen phosphate (K₂HPO₄), sucrose and distilled water. Paste samples with different ZrO₂:ZrSiO₄ weight ratios were prepared. Specifically, paste samples of different compositions set forth in the following Table 1 were prepared and applied by a substantially same process. The preparation and application of these paste samples will be described hereinafter by taking Sample 1 as an example. As for Sample 1, 0.5g of sucrose and 2g of potassium hydrogen phosphate were dissolved in 2g of distilled water to form a solution. Then 8g of zirconia powder with a particle size of about 0.1 micron and 4g of zircon powder with a particle size of about 1 micron were added into the solution. The mixture was mixed by a SpeedMixer (from FlackTek Inc., SC, USA) with a rotating speed of about 3000 rpm. After about 5 minutes of mixing, a homogeneous paste/slurry was obtained. Pastes of other compositions were obtained by similar processes.

During the application, the as-prepared slurry-like paste was introduced into cooling holes by syringe so as to mask the holes opening onto a surface of a specific article. Then the paste was dried at about 60°C for about 8 hours, followed by thermal treatment at about 200°C for about 1 hour. Thus dry plugs were formed in the holes and provided with enough mechanical strength for the following coating process. An Air Plasma Spray (APS) process was used to apply a thermal barrier coating (TBC) to surface of the article. Next, the article was dipped into a bath containing warm water in order to dissolve the plug, leaving the article having the TBC and open holes. The plugs were softened and became mushy within one hour or less, and finally were dissolved in different degree. The strength and solubility of the plugs made from different zirconia based paste compositions are listed in the following Table 1.

**Table 1 Zirconia based paste compositions and plug performance**

| Samples | Paste compositions | | | | | Plug performance |
|---|---|---|---|---|---|---|
| | ZrO₂ | ZrSiO₄ | K₂HPO₄ | sucrose | water | |
| S1 | 8 g | 0 g | 3 g | 0.8 g | 4 g | poor strength |
| S2 | 8 g | 0.5 g | 3 g | 0.8 g | 4 g | poor strength |
| S3 | 8 g | 1 g | 3 g | 0.8 g | 4 g | weak strength |
| S4 | 8 g | 1.5 g | 3 g | 0.8 g | 4 g | good strength & solubility |
| S5 | 8 g | 4 g | 2 g | 0.5 g | 2 g | good strength & solubility |
| S6 | 8 g | 7 g | 3 g | 0.8 g | 4 g | weak solubility |
| S7 | 8 g | 9 g | 3 g | 0.8 g | 4 g | poor solubility |

As illustrated in Table 1, when the ZrO₂:ZrSiO₄ weight ratio is in a range from about 1 to about 8, the plugs have an appropriate combination of strength and solubility. Specifically, when the ZrO₂:ZrSiO₄ weight ratio is in a range from 2 to 6, the plugs have both good strength and water solubility.

### Example 2

Beta-alumina based pastes were prepared by mixing beta-alumina (β-Al₂O₃), zircon (ZrSiO₄), potassium hydrogen phosphate (K₂HPO₄), sucrose and distilled water. Paste samples with different β-Al₂O₃:ZrSiO₄ ratios were prepared. Specifically, paste samples of different compositions set forth in the following Table 2 were prepared and applied by a process substantially the same with the process for preparing and applying the zirconia based paste as described herein above. The strength and solubility of the plugs made from different beta-alumina based paste compositions are listed in the following Table 2.

**Table 2 Beta-alumina based paste compositions and plug performance**

| Samples | Paste compositions | | | | | Plug performance |
|---|---|---|---|---|---|---|
| | β-Al₂O₃ | ZrSiO₄ | K₂HPO₄ | sucrose | water | |
| S1 | 8 g | 0 g | 3 g | 0.8 g | 4 g | poor strength |
| S2 | 8 g | 0.5 g | 3 g | 0.8 g | 4 g | poor strength |
| S3 | 8 g | 1 g | 3 g | 0.8 g | 4 g | weak strength |
| S4 | 8 g | 2.5 g | 3 g | 0.8 g | 4 g | good strength & solubility |
| S5 | 8 g | 5 g | 3 g | 0.8 g | 4 g | medium solubility |
| S6 | 8 g | 9 g | 3 g | 0.8 g | 4 g | poor solubility |

As illustrated in Table 2, when the β-Al₂O₃:ZrSiO₄ weight ratio is in a range from about 1 to about 8, the plugs have an appropriate combination of strength and solubility. Specifically, when the ZrO₂:ZrSiO₄ weight ratio is around 3, the plugs have both good strength and solubility.

### Comparative examples

Four comparative examples were tested by replacing the beta-alumina in S4 of Example 2 with alumina (Al₂O₃), alpha-alumina (α-Al₂O₃), or gamma-alumina (γ-Al₂O₃), or replacing the potassium hydrogen phosphate in S4 of Example 2 with ammonium dihydric phosphate (NH₄H₂PO₄). The strength and solubility of plugs in the four comparative examples are listed in the following Table 3.

**Table 3 Paste compositions and plug performance in comparative examples**

| Comparative examples | Paste compositions | | | | | Plug performance |
|---|---|---|---|---|---|---|
| Comparative example 1 | Al₂O₃ | ZrSiO₄ | K₂HPO₄ | sucrose | water | poor solubility |
| | 8 g | 2.5 g | 3 g | 0.8 g | 4 g | |
| Comparative example 2 | α-Al₂O₃ | ZrSiO₄ | K₂HPO₄ | sucrose | water | poor solubility |
| | 8 g | 2.5 g | 3 g | 0.8 g | 4 g | |
| Comparative example 3 | γ-Al₂O₃ | ZrSiO₄ | K₂HPO₄ | sucrose | water | poor solubility |
| | 8 g | 2.5 g | 3 g | 0.8 g | 4 g | |
| Comparative example 4 | β-Al₂O₃ | ZrSiO₄ | NH₄H₂PO₄ | sucrose | water | poor solubility |
| | 8 g | 2.5 g | 3 g | 0.8 g | 4 g | |

As illustrated in Table 3, the plugs in comparative examples have poor solubility and substantially are insoluble in water.

## Claims

1. A method comprising:
masking, with a water-soluble plug paste, at least one hole (209) of an article, wherein the hole (209) opens onto a surface (220) of the article (100, 200);
applying at least one coating (260) to the surface (220) of the article (200); and
removing the paste comprising contacting the paste with water, a water containing liquid or water containing environment to dissolve or re-disperse the paste, leaving at least one open hole (209) in the surface (230) of the coated article (200),
wherein the water-soluble plug paste comprises:
from about 20 weight percent to about 80 weight percent of a high temperature resistant filler material comprising a first material and a second material and having an average particle size in a range from about 0.1 micron to about 100 microns, wherein the first material comprises alkali metal doped alumina, zirconium oxide, titanium oxide, or a combination thereof, the second material comprises a silicate, and a weight ratio between the first material and the second material is in a range from about 1 to about 10;
from about 0.5 weight percent to about 20 weight percent of a hydrogen phosphate compound;
from about 0.5 weight percent to about 15 weight percent of a polyhydroxy compound; and
from about 5 weight percent to about 25 weight percent of water.

2. The method of claim 1, wherein the first material comprises beta-alumina, boehmite, zirconium oxide, titanium oxide, or a combination thereof, and wherein the second material comprises zirconium silicate.

3. The method of claim 1, wherein the hydrogen phosphate compound comprises sodium hydrogen phosphate, potassium hydrogen phosphate, or a combination thereof.

4. The method of claim 1, wherein the polyhydroxy compound comprises sugar.

5. The method of claim 1, wherein the weight percentage of the high temperature resistant filler material relative to the water-soluble plug paste is in a range from about 60 weight percent to about 80 weight percent.

6. The method of claim 1, wherein the weight percentage of the hydrogen phosphate compound relative to the water-soluble plug paste is in a range from about 10 weight percent to about 20 weight percent.

7. The method of claim 1, wherein the weight percentage of the polyhydroxy compound relative to the water-soluble plug paste is in a range from about 1 weight percent to about 5 weight percent.

8. The method of claim 1, wherein the weight percentage of water relative to the water-soluble plug paste is in a range from about 10 weight percent to about 15 weight percent.

9. The method of claim 1, wherein the weight ratio between the first material and the second material is in a range from about 1 to about 8.

10. The method of claim 1, further comprising, prior to the applying of the at least one coating, drying the water-soluble plug paste.

11. A water-soluble plug (250), comprising:
from about 25 weight percent to about 90 weight percent of a high temperature resistant filler material comprising a first material and a second material and having an average particle size in a range from about 0.1 micron to about 100 microns, wherein the first material comprises alkali metal doped alumina, zirconium oxide, titanium oxide, or a combination thereof, the second material comprises a silicate, and a weight ratio between the first material and the second material is in a range from about 1 to about 10;
from about 0.5 weight percent to about 25 weight percent of a hydrogen phosphate compound; and
from about 0.5 weight percent to about 20 weight percent of a polyhydroxy compound.

12. The water-soluble plug (250) of claim 11, wherein the first material comprises beta-alumina, boehmite, zirconium oxide, titanium oxide, or a combination thereof and wherein the second material comprises zirconium silicate.

13. The water-soluble plug (250) of claim 11, wherein the hydrogen phosphate compound comprises sodium hydrogen phosphate, potassium hydrogen phosphate, or a combination thereof.

14. The water-soluble plug (250) of claim 11, wherein the polyhydroxy compound comprises sugar.

15. The water-soluble plug (250) of claim 11, wherein the weight percentage of the high temperature resistant filler material relative to the water-soluble plug is in a range from about 70 weight percent to about 90 weight percent and/or wherein the weight percentage of the hydrogen phosphate compound relative to the water-soluble plug is in a range from about 5 weight percent to about 15 weight percent and/or wherein the weight percentage of the polyhydroxy compound relative to the water-soluble plug is in a range from about 1 weight percent to about 5 weight percent.

## Patentansprüche

1. Verfahren, umfassend:
mit einer wasserlöslichen Pfropfpaste Maskieren wenigstens eines Lochs (209) eines Gegenstands, wobei sich das Loch (209) zu einer Oberfläche (220) des Gegenstands (100, 200) öffnet;
Aufbringen wenigstens einer Beschichtung (260) auf die Oberfläche (220) des Gegenstands (200); und
Entfernen der Paste, umfassend Inkontaktbringen der Paste mit Wasser, einer wasserhaltigen Flüssigkeit oder wasserhaltigen Umgebung, um die Paste zu lösen oder zu redispergieren, um wenigstens ein offenes Loch (209) in der Oberfläche (230) des beschichteten Gegenstands (200) zurückzulassen,
wobei die wasserlösliche Pfropfpaste umfasst:
von etwa 20 Gewichtsprozent bis etwa 80 Gewichtsprozent an einem hochtemperaturbeständigen Füllmaterial, das ein erstes Material und ein zweites Material umfasst und eine mittlere Partikelgröße in dem Bereich von etwa 0,1 Mikrometer bis etwa 100 Mikrometer aufweist, wobei das erste Material Alkalimetall-dotiertes Aluminiumoxid, Zirkoniumoxid, Titanoxid oder eine Kombination davon umfasst und das zweite Material ein Silicat umfasst und das Gewichtsverhältnis zwischen dem ersten Material und dem zweiten Material in einem Bereich von etwa 1 bis etwa 10 liegt;
von etwa 0,5 Gewichtsprozent bis etwa 20 Gewichtsprozent an einer Hydrogenphosphatverbindung;
von etwa 0,5 Gewichtsprozent bis etwa 15 Gewichtsprozent an einer Polyhydroxyverbindung; und
von etwa 5 Gewichtsprozent bis etwa 25 Gewichtsprozent Wasser.

2. Verfahren gemäß Anspruch 1, wobei das erste Material beta-Aluminiumoxid, Böhmit, Zirkoniumoxid, Titanoxid oder eine Kombination davon umfasst und wobei das zweite Material Zirkoniumsilicat umfasst.

3. Verfahren gemäß Anspruch 1, wobei die Hydrogenphosphatverbindung Natriumhydrogenphosphat, Kaliumhydrogenphosphat oder eine Kombination davon umfasst.

4. Verfahren gemäß Anspruch 1, wobei die Polyhydroxyverbindung Zucker umfasst.

5. Verfahren gemäß Anspruch 1, wobei der Gewichtsprozentanteil des hochtemperaturbeständigen Füllmaterials bezogen auf die wasserlösliche Pfropfpaste in dem Bereich von etwa 60 Gewichtsprozent bis etwa 80 Gewichtsprozent liegt.

6. Verfahren gemäß Anspruch 1, wobei der Gewichtsprozentanteil der Hydrogenphosphatverbindung bezogen auf die wasserlösliche Pfropfpaste in dem Bereich von etwa 10 Gewichtsprozent bis etwa 20 Gewichtsprozent liegt.

7. Verfahren gemäß Anspruch 1, wobei der Gewichtsprozentanteil der Polyhydroxyverbindung bezogen auf die wasserlösliche Pfropfpaste in dem Bereich von etwa 1 Gewichtsprozent bis etwa 5 Gewichtsprozent liegt.

8. Verfahren gemäß Anspruch 1, wobei der Gewichtsprozentanteil an Wasser bezogen auf die wasserlösliche Pfropfpaste in dem Bereich von etwa 10 Gewichtsprozent bis etwa 15 Gewichtsprozent liegt.

9. Verfahren gemäß Anspruch 1, wobei das Gewichtsverhältnis zwischen dem ersten Material und dem zweiten Material in dem Bereich von etwa 1 bis etwa 8 liegt.

10. Verfahren gemäß Anspruch 1, ferner umfassend, vor dem Aufbringen der wenigstens einen Beschichtung, Trocknen der wasserlöslichen Pfropfpaste.

11. Wasserlöslicher Pfropf (250), umfassend:
von etwa 25 Gewichtsprozent bis etwa 90 Gewichtsprozent an einem hochtemperaturbeständigen Füllmaterial, das ein erstes Material und ein zweites Material umfasst und eine mittlere Partikelgröße in dem Bereich von etwa 0,1 Mikrometer bis etwa 100 Mikrometer aufweist, wobei das erste Material Alkalimetall-dotiertes Aluminiumoxid, Zirkoniumoxid, Titanoxid oder eine Kombination davon umfasst und das zweite Material ein Silicat umfasst und das Gewichtsverhältnis zwischen dem ersten Material und dem zweiten Material in einem Bereich von etwa 1 bis etwa 10 liegt;
von etwa 0,5 Gewichtsprozent bis etwa 25 Gewichtsprozent an einer Hydrogenphosphatverbindung; und
von etwa 0,5 Gewichtsprozent bis etwa 20 Gewichtsprozent an einer Polyhydroxyverbindung.

12. Wasserlöslicher Pfropf (250) gemäß Anspruch 11, wobei das erste Material beta-Aluminiumoxid, Böhmit, Zirkoniumoxid, Titanoxid oder eine Kombination davon umfasst und wobei das zweite Material Zirkoniumsilicat umfasst.

13. Wasserlöslicher Pfropf (250) gemäß Anspruch 11, wobei die Hydrogenphosphatverbindung Natriumhydrogenphosphat, Kaliumhydrogenphosphat oder eine Kombination davon umfasst.

14. Wasserlöslicher Pfropf (250) gemäß Anspruch 11, wobei die Polyhydroxyverbindung Zucker umfasst.

15. Wasserlöslicher Pfropf (250) gemäß Anspruch 11, wobei der Gewichtsprozentanteil an dem hochtemperaturbeständigen Füllmaterial bezogen auf den wasserlöslichen Pfropf in dem Bereich von etwa 70 Gewichtsprozent bis etwa 90 Gewichtsprozent liegt und/oder wobei der Gewichtsprozentanteil der Hydrogenphosphatverbindung bezogen auf den wasserlöslichen Pfropf in dem Bereich von etwa 5 Gewichtsprozent bis etwa 15 Gewichtsprozent liegt und/oder wobei der Gewichtsprozentanteil der Polyhydroxyverbindung bezogen auf den wasserlöslichen Pfropf in dem Bereich von etwa 1 Gewichtsprozent bis etwa 5 Gewichtsprozent liegt.

## Revendications

1. Procédé comprenant :
le masquage, avec une pâte de bouchage hydrosoluble, d'au moins un trou (209) d'un article, le trou (209) s'ouvrant sur une surface (220) de l'article (100, 200) ;
l'application d'au moins un revêtement (260) sur la surface (220) de l'article (200) ; et
l'élimination de la pâte comprenant la mise en contact de la pâte avec de l'eau, un liquide contenant de l'eau ou un environnement contenant de l'eau pour dissoudre ou redisperser la pâte, ce qui laisse au moins un trou ouvert (209) dans la surface (230) de l'article revêtu (200),
dans lequel la pâte de bouchage hydrosoluble comprend :
d'environ 20 pour cent en poids à environ 80 pour cent en poids d'une matière de charge résistante aux températures élevées comprenant une première matière et une seconde matière et ayant une taille moyenne des particules dans une plage d'environ 0,1 micromètre à environ 100 micromètres, la première matière comprenant de l'alumine dopée par un métal alcalin, de l'oxyde zirconium, de l'oxyde de titane ou une association de ceux-ci, la seconde matière comprenant un silicate et un rapport pondéral entre la première matière et la seconde matière étant dans une plage d'environ 1 à environ 10 ;
d'environ 0,5 pour cent en poids à environ 20 pour cent en poids d'un composé hydrogénophosphate ;
d'environ 0,5 pour cent en poids à environ 15 pour cent en poids d'un composé polyhydroxylé ; et
d'environ 5 pour cent en poids à environ 25 pour cent en poids d'eau.

2. Procédé selon la revendication 1, dans lequel la première matière comprend de l'alumine bêta, de la boehmite, de l'oxyde de zirconium, de l'oxyde de titane ou une association de ceux-ci et dans lequel la seconde matière comprend du silicate de zirconium.

3. Procédé selon la revendication 1, dans lequel le composé hydrogénophosphate comprend de l'hydrogénophosphate de sodium, de l'hydrogénophosphate de potassium ou une association de ceux-ci.

4. Procédé selon la revendication 1, dans lequel le composé polyhydroxylé comprend du sucre.

5. Procédé selon la revendication 1, dans lequel le pourcentage en poids de la matière de charge résistante aux températures élevées par rapport à la pâte de bouchage hydrosoluble est dans une plage d'environ 60 pour cent en poids à environ 80 pour cent en poids.

6. Procédé selon la revendication 1, dans lequel le pourcentage en poids du composé hydrogénophosphate par rapport à la pâte de bouchage hydrosoluble est dans une plage d'environ 10 pour cent en poids à environ 20 pour cent en poids.

7. Procédé selon la revendication 1, dans lequel le pourcentage en poids du composé polyhydroxylé par rapport à la pâte de bouchage hydrosoluble est dans une plage d'environ 1 pour cent en poids à environ 5 pour cent en poids.

8. Procédé selon la revendication 1, dans lequel le pourcentage en poids d'eau par rapport à la pâte de bouchage hydrosoluble est dans une plage d'environ 10 pour cent en poids à environ 15 pour cent en poids.

9. Procédé selon la revendication 1, dans lequel le rapport pondéral entre la première matière et la seconde matière est dans une plage d'environ 1 à environ 8.

10. Procédé selon la revendication 1, comprenant en outre, avant l'application de l'au moins un revêtement, le séchage de la pâte de bouchage hydrosoluble.

11. Bouchage hydrosoluble (250), comprenant :
d'environ 25 pour cent en poids à environ 90 pour cent en poids d'une matière de charge résistante aux températures élevées comprenant une première matière et une seconde matière et ayant une taille moyenne des particules dans une plage d'environ 0,1 micromètre à environ 100 micromètres, la première matière comprenant de l'alumine dopée par un métal alcalin, de l'oxyde zirconium, de l'oxyde de titane ou une association de ceux-ci, la seconde matière comprenant un silicate et un rapport pondéral entre la première matière et la seconde matière étant dans une plage d'environ 1 à environ 10 ;
d'environ 0,5 pour cent en poids à environ 25 pour cent en poids d'un composé hydrogénophosphate ; et
d'environ 0,5 pour cent en poids à environ 20 pour cent en poids d'un composé polyhydroxylé.

12. Bouchage hydrosoluble (250) selon la revendication 11, dans lequel la première matière comprend de l'alumine bêta, de la boehmite, de l'oxyde de zirconium, de l'oxyde de titane ou une association de ceux-ci et dans lequel la seconde matière comprend du silicate de zirconium.

13. Bouchage hydrosoluble (250) selon la revendication 11, dans lequel le composé hydrogénophosphate comprend de l'hydrogénophosphate de sodium, de l'hydrogénophosphate de potassium ou une association de ceux-ci.

14. Bouchage hydrosoluble (250) selon la revendication 11, dans lequel le composé polyhydroxylé comprend du sucre.

15. Bouchage hydrosoluble (250) selon la revendication 11, le pourcentage en poids de la matière de charge résistante aux températures élevées par rapport au bouchage hydrosoluble étant dans une plage d'environ 70 pour cent en poids à environ 90 pour cent en poids et/ou le pourcentage en poids du composé hydrogénophosphate par rapport au bouchage hydrosoluble étant dans une plage d'environ 5 pour cent en poids à environ 15 pour cent en poids et/ou le pourcentage en poids du composé polyhydroxylé par rapport au bouchage hydrosoluble étant dans une plage d'environ 1 pour cent en poids à environ 5 pour cent en poids.
